# EUROPEAN PATENT APPLICATION

(11) **EP 1 662 254 A1**
(43) Date of publication of application: **31.05.2006**
(21) Application number: 05257088.4
(22) Date of filing: 17.11.2005
(51) Int. Cl.: G01N 30/18

(54) **Gas chromatography sample introduction devices and methods of using the same**

(30) Priority: 18.11.2004 US 993393
(71) Applicant: Agilent Technologies, Inc., Palo Alto, CA 94306 (US)
(72) Inventor: Hastings, Mitchell R., Rancho Murieta California 95683 (US)
(74) Representative: Tollett, Ian

(57) **Abstract**

Gas Chromatography (GC) sample introduction devices and methods for using the same are provided. Embodiments include septum retainer nut assemblies (10) for use in GC inlet assemblies, fluid transfer member supports (50) for introducing a fluid transfer member into a fluid transfer member guide (20) of a septum retainer nut assembly of a GC device inlet assembly, and GC sample introduction systems. Also provided are methods of introducing a sample into a GC device, and kits for use in practicing the subject methods.

## Description

The present invention relates to a septum retainer nut assembly for use in a gas chromatography device inlet assembly, and to systems, method and kits relating to the same.

Gas Chromatography (GC) is a known method of analyzing to qualitatively and/or quantitatively determine the sample components thereof. A typical gas chromatographic apparatus includes: a sample introduction system having an injection port, into which the sample is injected and mixed with an inert gas at high temperature; a column through which the various vaporized components of the sample will travel at a rate related to the characteristics of the specific components and their relative attraction to the stationary phase; and a detector for measuring the presence of each component.

Analytical chromatography involves a series of steps: sample collection, sample preparation, sample introduction into the chromatographic system, chromatographic separation into individual components, detection of those components, and data acquisition and reduction. For each step, the analyst must make appropriate choices regarding the particular procedures and instrumentation to use. Improper selection or use of the sample introduction system can dramatically limit the performance of the system and, therefore, the ultimate performance of the analytical method. For example, a sample introduction system should provide accurate, reproducible, and predictable introduction of sample into the column, without causing or otherwise introducing contaminates into the sample or analytical instrument.

As chromatography continues to be used, there continues to be an interest in chromatography devices and devices to be used therewith, including sample introduction devices. Of particular interest is the development of sample introduction systems for use in high throughput automated sample injection devices, especially sample introduction improvements that increase the inertness of the overall system.

Gas Chromatography (GC) sample introduction devices and methods of using the same are provided. Embodiments include septum nut retainer assemblies for use in GC inlet assemblies, where the septum nut retainer assemblies include a nut having a top surface with an opening therethrough and a septum retainer having a fluid transfer member guide passing through the opening. In certain embodiments, the fluid transfer member guide has an inner diameter that is at least about 0.2 to about 0.8 mm.

Also provided are fluid transfer member supports for introducing a fluid transfer member into a fluid transfer member guide of a septum retainer nut assembly of a GC device inlet assembly, where the fluid transfer member supports include an elongated member having first and second ends and a passageway therethrough dimensioned to accommodate a fluid transfer member, wherein the fluid transfer member support is configured to be operatively connected to a fluid transfer member guide of a septum retainer nut assembly of a GC device inlet assembly such that when a fluid transfer member is moved into the GC device inlet assembly via the support, the fluid transfer member does not contact the fluid transfer member guide in a manner that removes material from the fluid transfer member guide.

GC sample introduction systems are also provided, where embodiments include a GC device inlet assembly having a septum retainer nut assembly with a fluid transfer member guide, and a fluid transfer member support for introducing a fluid transfer member into the fluid transfer member guide of a septum retainer nut assembly of a GC device inlet assembly, wherein the fluid transfer member support is operatively connected to the fluid transfer member guide such that when a fluid transfer member is moved into the GC device inlet assembly via the support, the fluid transfer member does not contact the fluid transfer member guide in a manner that removes material from the fluid transfer member guide.

Methods of introducing a sample into a GC device are also provided, where embodiments include:
(a) positioning a fluid transfer member into a GC device sample introduction system having:
   (i) a GC device inlet assembly having a septum retainer nut assembly with a fluid transfer member guide; and
   (ii) a fluid transfer member support for introducing a fluid transfer member into the fluid transfer member guide of the septum retainer nut assembly,
   wherein the fluid transfer member support is operatively connected to the fluid transfer member guide such that when the fluid transfer member is positioned into the GC device inlet assembly via the support, the fluid transfer member does not contact the fluid transfer member guide in a manner that removes material from the fluid transfer member guide; and
(b) introducing sample into the GC device via said positioned fluid transfer member.

Also provided are kits, where embodiments include a subject septum nut retainer assembly.

A number of preferred embodiments of the invention will now be described with reference to the drawings, in which:-

Fig. 1A is an exemplary block diagram of an analytical apparatus according to the subject invention.

Fig. 1B is an exemplary block diagram of a chromatographic apparatus which may be utilized with the apparatus of Fig. 1 according to the subject invention.

Fig. 2 shows an exploded view of an exemplary embodiment of a septum retainer nut assembly that includes a nut and a fluid transfer member guide according to the subject invention. '

Fig. 3 shows another exemplary embodiment of a fluid transfer member guide according to the subject invention.

Fig. 4 shows the septum retainer nut assembly of Fig. 2 assembled.

Fig. 5 shows an exemplary septum that may be used with the septum retainer nut assembly of Fig. 2 and an inlet assembly of a GC device.

Fig. 6 shows an exemplary fluid transfer member support according to the subject invention.

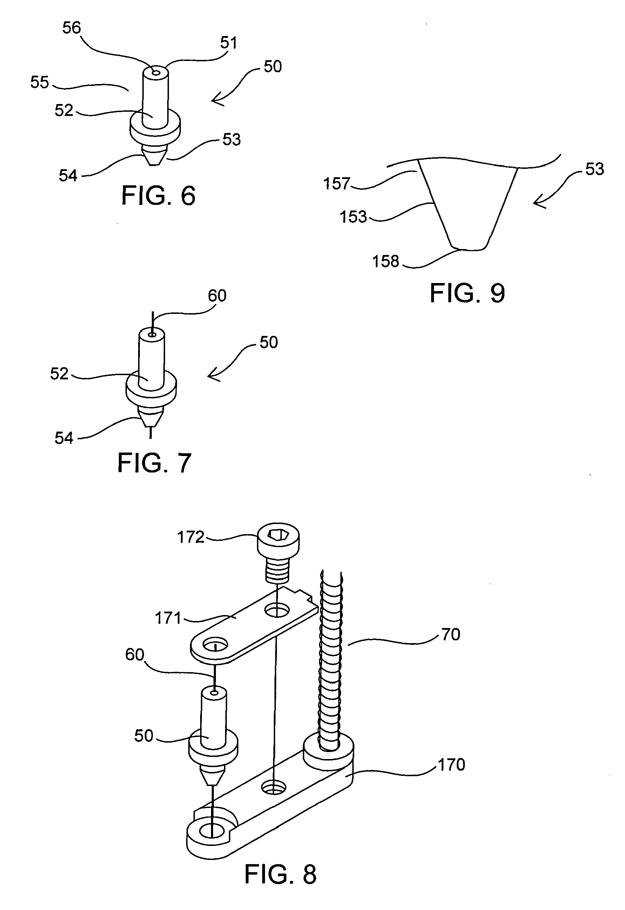

Fig .7 shows the fluid transfer member support of Fig. 6 having a fluid transfer member supported thereby.

Fig. 8 shows the fluid transfer member support of Fig. 7 associated with a liquid sampling apparatus.

Fig. 9 shows an enlarged view of the conical end of the fluid transfer member support of Fig. 6.

Unless defined otherwise, all technical and scientific terms used herein have the same meaning as commonly understood by one of ordinary skill in the art to which this invention belongs. Still, certain elements are defined below for the sake of clarity and ease of reference.

The term "nut" refers to a perforated block, usually of metal, that has an internal screw thread and is used on a bolt or screw for tightening or holding an object, e.g., a septum, in a fixed position relative to another object and the nut.

A "septum" refers to a dividing wall or membrane, usually made of silicone or plastic.

A "channel" refers to any type of fluid conduit, such as a tubular passageway.

A "fluid transfer member" refers to a device that serves to transfer a volume of fluid, e.g., a gas or liquid, from a first to a second location. In certain embodiments, the fluid transfer member is a syringe needle.

A "liquid seal" refers to a "closure" that is substantially, if not completely, impermeable to liquids.

"Optional" or "optionally" means that the subsequently described circumstance may or may not occur, so that the description includes instances where the circumstance occurs and instances where it does not.

A "plastic" is any synthetic organic polymer of high molecular weight (for example at least 1,000 grams/mole, or even at least 10,000 or 100,000 grams/mole.

An item is considered to be "flexible" if it can be bent 180 degrees around a roller of less than 1.25 cm in radius. The item can be so bent and straightened repeatedly in either direction at least 100 times without failure (for example, cracking) or plastic deformation. This bending must be within the elastic limits of the material. The foregoing test for flexibility is performed at a temperature of 20 °C.

An item is "rigid" if it is not flexible, and is constructed such that a segment about 2.5 by 7.5 cm retains its shape and cannot be bent along any direction more than 60 degrees (and often not more than 40, 20, 10, or 5 degrees) without breaking.

"Fluid tight" is used herein to describe the spatial relationship between two solid surfaces in physical contact, such that fluid (liquid and/or gas) is prevented from flowing into the interface between the surfaces.

The terms "Compliant" and "Deformable" are employed interchangeably and refer to a material that is able to be compressed e.g., to conform to a contacted surface.

"Chromatographic" processes generally include preferential separations of components, and include gas phase, liquid phase, gas solid, gas liquid, solid phase, reverse-phase, hydrophobic interaction, ion exchange, molecular sieve chromatography, affinity chromatography and like methods.

"Gas chromatographic analysis" refers generally to an analysis wherein an inert carrier gas is passed through a temperature-controlled column which contains a stationary phase in the form of porous sorptive media, or through a hollow capillary coated with the stationary phase. A sample of the subject mixture is injected into the carrier gas stream and passed through the column. As the subject mixture passes through the column, it separates into its various components. A detector, positioned at the outlet end of the column, detects each of the separated components contained in the carrier fluid as they exit the column.

"Detector" refers to an element that outputs a signal that may be data or converted to data. In representative embodiments, the detector may provide a sample peak data representative of information useful as a chromatogram, and includes a wide variety of useful chromatographic detectors, such as the flame ionization detector (FID), photoionization detector (PID), nitrogen phosphorus detector (NPD), flame photometric detector (FPD), thermal conductivity detector (TCD), atomic emission detector (AED), electrolytic conductivity detector (ELCD), and electron capture detector (ECD). Mass spectral detectors, such as Ion Traps, Inductively Coupled Plasma, etc., as well as infrared spectral detectors are compassed within the scope of the term "detector"..

The term "surface treatment" is used to refer to preparation or modification of the surface of a substrate such as a container surface. Accordingly, "surface treatment" as used herein includes: physical surface adsorptions; covalent bonding of selected moieties to functional groups on the surface of treated substrates (such as to amine, hydroxyl or carboxylic acid groups on condensation polymers); methods of coating surfaces, including dynamic deactivation of treated surfaces (such as by adding surfactants to media), polymer grafting to the surface of treated substrates (such as polystyrene or divinyl-benzene) and thin-film deposition of materials such as diamond or sapphire to treated substrates.

The terms "assessing" and "evaluating" are used interchangeably to refer to any form of measurement, and include determining if an element is present or not. The terms "determining," "measuring," "assessing," and "assaying" are used interchangeably and include both quantitative and qualitative determinations. Assessing may be relative or absolute. "Assessing the presence of" includes determining the amount of something present, as well as determining whether it is present or absent.

"Communicating" information references transmitting the data representing that information as signals (e.g., electrical, optical, radio signals, and the like) over a suitable communication channel (e.g., a private or public network).

"Forwarding" an item refers to any means of getting that item from one location to the next, whether by physically transporting that item or otherwise (where that is possible) and includes, at least in the case of data, physically transporting a medium carrying the data or communicating the data.

By "remote location" it is meant a location other than the location at which an object is present or an event occurs. For example, a remote location could be another location (e.g. office, lab, etc.) in the same city, another location in a different city, another location in a different state, another location in a different country, etc. As such, when one item is indicated as being "remote" from another, what is meant is that the two items are at least in different buildings, and may be at least one mile, ten miles, or at least one hundred miles (or more) apart.

A "computer", "processor" or "processing unit" are used interchangeably and each references any hardware or hardware/software combination which can control components as required to execute recited steps. For example a computer, processor, or processor unit includes a general purpose digital microprocessor suitably programmed to perform all of the steps required of it, or any hardware or hardware/software combination which will perform those or equivalent steps. Programming may be accomplished, for example, from a computer readable medium carrying necessary program code (such as a portable storage medium) or by communication from a remote location (such as through a communication channel).

A "memory" or "memory unit" refers to any device which can store information for retrieval as signals by a processor, and may include magnetic or optical devices (such as a hard disk, floppy disk, CD, or DVD), or solid state memory devices (such as volatile or non-volatile RAM). A memory or memory unit may have more than one physical memory device of the same or different types (for example, a memory may have multiple memory devices such as multiple hard drives or multiple solid state memory devices or some combination of hard drives and solid state memory devices).

To "record" data, programming or other information on a computer readable medium refers to a process for storing information, using any such methods as known in the art. Any convenient data storage structure may be chosen, based on the means used to access the stored information. A variety of data processor programs and formats can be used for storage, e.g. word processing text file, database format, etc.

Gas Chromatography sample introduction devices and methods for their use are provided. Embodiments include septum nut retainer assemblies for use in GC inlet assemblies, fluid transfer member supports for introducing a fluid transfer member into a fluid transfer member guide of a septum nut retainer assembly of a GC device inlet assembly, and GC sample introduction systems. Also provided are methods of introducing a sample into a GC device, and kits that include a subject septum retainer nut assembly.

Before the present invention is described in greater detail, it is to be understood that this invention is not limited to particular embodiments described, as such may, of course, vary. It is also to be understood that the terminology used herein is for the purpose of describing particular embodiments only, and is not intended to be limiting, since the scope of the present invention will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range is encompassed within the invention. The upper and lower limits of these smaller ranges may independently be included in the smaller ranges is also encompassed within the invention, subject to any specifically excluded limit in the stated range. Where the stated range includes one or both of the limits, ranges excluding either or both of those included limits are also included in the invention.

Unless defmed otherwise, all technical and scientific terms used herein have the same meaning as commonly understood by one of ordinary skill in the art to which this invention belongs. Although any methods and materials similar or equivalent to those described herein can also be used in the practice or testing of the present invention, the preferred methods and materials are now described.

All patents and publications mentioned herein are incorporated herein by reference to disclose and describe the methods and/or materials in connection with which the publications are cited. The citation of any patent or publication is for its disclosure prior to the filing date and should not be construed as an admission that the present invention is not entitled to antedate such publication by virtue of prior invention. Further, the dates of publication provided may be different from the actual publication dates which may need to be independently confirmed.

It must be noted that as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope or spirit of the present invention.

The figures shown herein are not necessarily drawn to scale, with some components and features being exaggerated for clarity.

### DEVICES

As noted above, the subject invention includes devices for use with GC devices. As described below, in one aspect a GC device includes a sample introduction system which includes componentry for introducing a sample to a GC column. Sample introduction systems of GC devices include a device known as a sample inlet assembly that is interfaced with an injection port. Embodiments include septum nut retainer assemblies for use in a GC device inlet assembly, e.g., an injection port thereof, whereby a quantity of sample in a liquid form is injected to a GC column through the septum retainer nut assembly using a syringe. Embodiments of the subject invention include septum retainer nut devices for use in a GC device inlet assembly, and more specifically for use at the point of syringe introduction to the GC device inlet system, e.g., from a fluid transfer member associated with a fluid transfer member support.

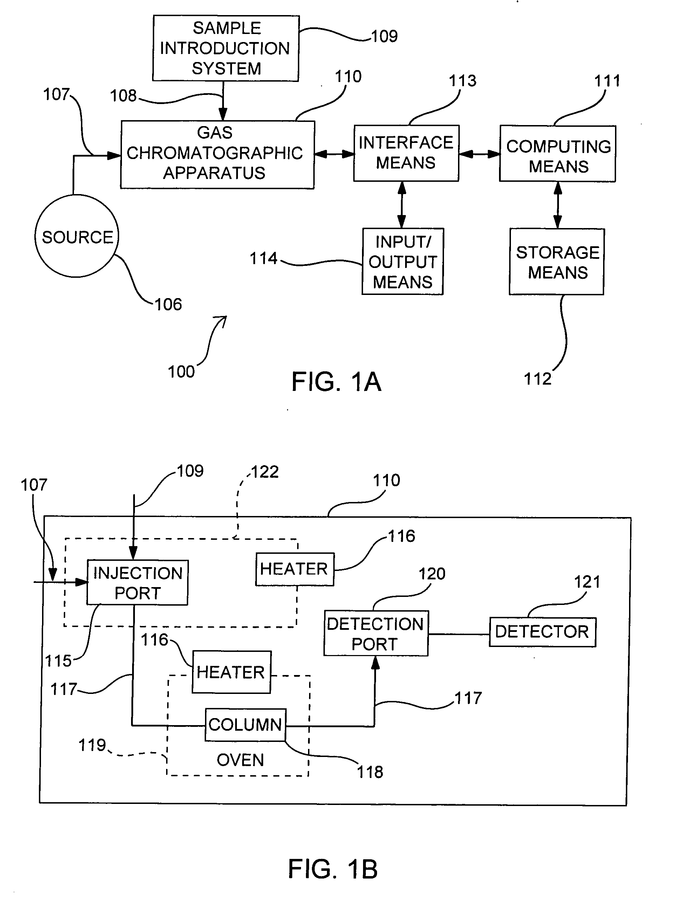

An embodiment of an exemplary system 100 of the subject invention is illustrated in Figs. 1A, 1B. The system 100 includes sample introduction system 109, a chromatographic apparatus 110, computing means 111, storage means 112, interface means 113, and input/output means 114. In order to perform a chromatographic separation of a sample introduced on line 108, a quantity of the sample is injected into a fluid stream, e.g., in the form of a pressurized carrier gas, via sample inlet 122 having an injection port 115 that is supplied with a carrier gas stream. The carrier gas is supplied on source line 107 to the inlet 122 from a source 106. The carrier gas may include one or more component gases--such as, for example, hydrogen, nitrogen, or helium--depending upon the particular chromatographic separation to be performed.

Sample inlet 122 provides a portion of the sample/carrier gas mixture to a separation column 118. In certain embodiments, the column 118 may be positioned within a temperature-controlled thermal chamber, or oven 119, or within or around a resistively heated column or an integrated peltier heated and cooled column, for example. The inlet 122 and the oven 119 (if provided) may be temperature controlled, e.g., by way of respective heaters 116. In order to ensure that the temperature within the oven 119 is at a desired level, the temperatures in the inlet 122 and oven 119 may be provided to interface 113 and the computing means 111. The heaters 116 may maintain controlled temperatures in the inlet 122 and oven 119 in response to control signals generated by the computing means 111. The carrier gas/sample combination passing through the column 118 on line 117 may thereby be exposed to a temperature profile. The temperatures may be controlled according to a selected program so that the sample will separate into its components.

As the carrier gas (containing the sample) exits the column 118, the presence of one or more sample constituent components is detected by a detector 121. The detector 121 can be any of the GC detectors known in the art, so long as it is capable of determining at least one property (e.g., such as a physicochemical property) of the sample components which exit the column 118. The detector output signal may then be received by the processor 111 and optionally stored in the storage element 112. The detector output signal may be provided in the form of data representative of a series of sample peaks in at least one sample peak series. The sample peaks may be identified and presented in one or more sample peak series. Each sample peak series may be analyzed with aid of a peak identification method based on data representative of one or more selected standard peak groups. Data representative of the standard peak group(s) may be predetermined or inputted at the input/output element 114 and stored in the storage element 112.

The processor 111 may include computing devices amenable to the practice of this invention, e.g., one or more computing devices such computers, microprocessors, micro controllers, switches, logic gates, or any equivalent logic device capable of performing the functions required of it. Processor 111 may be coupled with interface element 113 and information input/output element 114; the latter may include a keyboard, keypad, or computer mouse, or remote processor (not shown) for inputting operating condition parameters, system data, and the like. Information input/output element 114 may include display means such as an alphanumeric or video display, a printer, or the like. The processor 111 may further include storage element112 in the form of volatile and non-volatile memory devices in which input and output information, operating condition parameters, system information, and programs may be stored and retrieved. Operating commands, device and fluid type information, detector response attributes, column temperature programs, and other information necessary to perform a chromatographic analysis may be entered into the processor 111 by way of the input/output element 114 or retrieved from storage element 112. Messages prompting the user to enter certain information, such as a desired operating parameter, may be generated by the processor 111 and displayed on the display. The interface element 113 may further include network and bus system (input/output or I/O) controllers, isolation devices, clocks, and other related electronic components for performing control, processing, and communication tasks other than those described herein.

The septum nut retainer assemblies of the subject invention are adapted for use with the sample introduction system of a GC assembly and more particularly with a GC device inlet assembly (an injection port thereof). Embodiments of the septum retainer nut assemblies of the subject invention are configured to minimize, including eliminate, contact between a fluid transfer member, and/or reduce any adverse effects of any contact (e.g., fming of the contacted material), introduced therein in the course of introducing sample to a GC column for analysis.

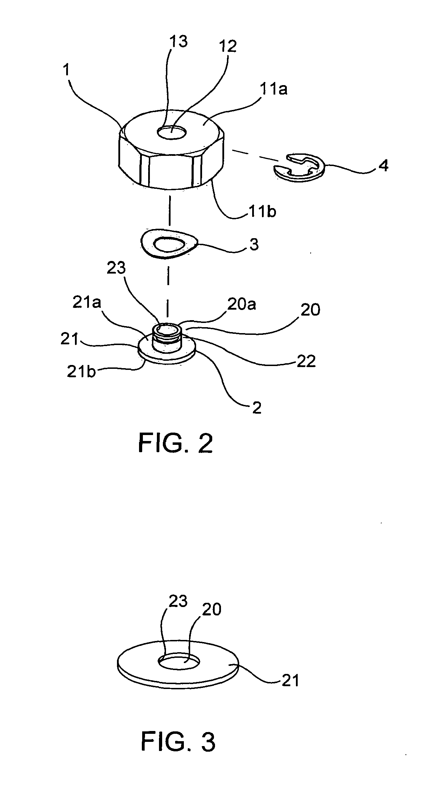

Fig. 2 shows an exploded view of an exemplary septum retainer nut assembly 10 according to one aspect of the subject invention. Septum retainer nut assembly 10 generally includes a nut 1 and a septum retainer 2. Other components may include a washer 3 and a retaining ring 4. In use, the nut is positioned over the septum retainer, which in turn retains a septum. During sample introduction using a fluid transfer member, the fluid transfer member is introduced through the opening of the nut/septum retainer assembly to pierce a septum retained thereby at the input or inlet system of a gas chromatography column.

The nut 1 may be characterized by a first or top surface 11a, configured for mating with a fluid transfer member support as described in greater detail below, and a bottom or second surface configured for contact with septum retainer 2. In certain embodiments, a washer or gasket may be positioned between the nut and septum retainer. In any event, the nut provides a space, defined by surface 11b and the walls of the nut, for receiving a septum retainer.

Nut 1 includes an opening 12 therethrough. That is, the nut has a bore that traverses the entire thickness of the nut so as to provide a passage from surface 11a to surface 11b via opening 12 for a fluid transfer member.

Opening 12 may have any suitable dimension, with the proviso that it is so dimensioned to accommodate a fluid transfer member therethrough and/or a fluid transfer member support and/or a portion of the septum retainer therethrough. For example, in certain embodiments, a fluid transfer member guide is positioned through opening 12 and a fluid transfer member may then be inserted through opening 12 via insertion through the fluid transfer member guide. In certain embodiments, a fluid transfer member support may be mated to the septum retainer nut assembly so that a fluid transfer member may be inserted through the fluid transfer member support and into the fluid transfer member guide of opening 12, as described below.

The inner diameter of opening 12, defined as the distance from one side of the inner surface 13 of the opening to the opposing side of the inner surface 13 of the opening, proceeding on a line parallel to a surface of the nut such as surface 11a, is suitable to allow a fluid transfer member therethrough and/or a portion of the septum retainer therethrough. In certain embodiments, the inner diameter of the nut opening may range from about 0.2 mm to about 0.8 mm, e.g., from about 0.4 mm to about 0.8mm or from about 0.2 mm to about 0.4 mm.

Nut 1 may be made of any suitable material, where materials may include metals and metal alloys, graphite, plastics such as, e.g., polyimides (e.g., Vespel® ), metal oxides such as gemstones (sapphire, ruby). In certain embodiments, the nut may be a "composite", i.e., a composition made up of different or unlike materials. The composite may be a block composite, e.g., an A-B-A block composite, an A-B-C block composite, or the like. Alternatively, the composite may be a heterogeneous combination of materials, i.e., in which the materials are distinct or are in separate phases, or a homogeneous combination of unlike materials. As used herein, the term "composite" is used to include a "laminate" composite. A "laminate" refers to a composite material formed from several different bonded layers of the same or different materials. For example, a nut may be a composite of plastic and graphite, such as, e.g., Vespel-graphite composites, and the like.

In certain embodiments, the nut may be knurled or include other surface modifications to facilitate grasping of the nut.

As described above, a septum retainer nut assembly also includes a septum retainer 2. The septum retainer 2 of septum retainer nut assembly 10 includes a body 21 having a first or top side 21a and a second or bottom side 21b, which second surface contacts a surface of a septum (not shown) to be retained by the septum retainer nut assembly. Body 21 may be any suitable shape and dimension, shown in this particular embodiment as a disc. Body 21 is dimensioned to be received by nut 1, such that the nut is placed over the body, with or without a washer or gasket positioned therebetween. Accordingly, the shape and/or dimensions of the body are commensurate with mating with the nut. For example, the diameter of a body may range from about 0.2 cm to about 1.1 cm, where representative ranges of interest include, but are not limited to: from about 0.2 cm to about 0.5 cm; from about 0.5 cm to about 0.8 cm; from about 0.8 cm to about 1.1 cm.

Septum retainer 2 further includes a fluid transfer member guide 20. Fluid transfer member guide 20 is configured to align a fluid transfer member inserted therein with a septum over which the fluid transfer member guide is positioned. Septum retainer may be a simple bore in body 21 as shown in Fig. 3, or may be an elongated structure such as a tubular structure as shown in Fig. 2, in which the fluid transfer member guide extends a distance from the surface of the body and is coaxial with the bore in the body. In any event, fluid transfer member guide 20 provides an opening in the body configured to receive a fluid transfer member. In use, when body 21 is mated with nut 1, fluid transfer member guide 20 is aligned with (e.g., coaxially aligned) opening 12 and/or in certain embodiments in which guide 20 has a tubular configuration passes through opening 12 of the nut. As such, the size and shape of the fluid transfer member guide 20 is commensurate to mate with opening 12 of the nut and/or with the size/shape of a fluid transfer member support that may be mated with the fluid transfer member guide 20.

Embodiments include fluid transfer member guides configured so that when a fluid transfer member is inserted therethrough to a GC device inlet assembly, the fluid transfer member does not contact the fluid transfer member guide in a manner that removes material from the fluid transfer member guide, or from the fluid transfer member. Accordingly, aspects include fluid transfer member guides that are so configured due to, e.g., dimensions thereof, materials thereof (including surface coating treatments if any), etc.

The inner diameter or width of a fluid transfer member guide, defined as the distance from one side of the inner surface 23 of the fluid transfer member guide to the opposing side of the inner surface 23 of the fluid transfer member guide, proceeding on a line parallel to a surface of the body such as surface 20a of the body, may be adapted to allow a fluid transfer member therethrough and/or a fluid transfer member support therein, e.g., without physical contact of the fluid transfer member with the walls of the fluid transfer member guide 20 in certain embodiments and/or adapted to reduce any adverse effects of any contact (e.g., removal of material from the fluid transfer member, fluid transfer member guide, fluid transfer member guide support, etc.)

In certain embodiments, the inner diameter of a fluid transfer member guide 20 may be at least about 0.20 mm, e.g., at least about .25 mm, e.g., at least about 0.53 mm, e.g., at least about 1.0 mm, e.g., at least about 0.2mm to about 1.2 mm, when associated with a nut having dimensions that fall within the ranges described herein. In those embodiments in which the fluid transfer member guide 20 is an elongated structure, the length of the fluid transfer member guide, as measured from surface 21a to surface 20a of the guide (the guide surface most distal from surface 21a of the body), may be sufficient to provide a suitable connection with a mated fluid transfer member support. In certain embodiments, the length of the fluid transfer member guide may range from about 1 mm to about 10 mm, where representative ranges include, but are not limited to, from about 3 mm to about 6 mm and from about 1 mm to about 10 mm.

The fluid transfer member guide may be made from any suitable material, including metals, plastics, etc. The material of the fluid transfer member guide may be selected to be compatible with any chemicals, conditions or physical contact with which the guide may be exposed in the intended use. For example, materials may be selected so that when a fluid transfer member is inserted therethrough to a GC device inlet assembly, material from the fluid transfer member guide is not removed. For example, the septum retainer or at least the fluid transfer member guide 20 or at least the inner surface 23 the fluid transfer member guide 20 may include (may be made entirely or in part) of an unreactive or inert material such as sapphire, steel products, and plastics. In this manner, if, e.g., the inner surface 23 of the fluid transfer member guide is contacted with a surface of another component (e.g., a fluid transfer member, fluid transfer member support, etc.,) the contact will not remove material from the fluid transfer member guide at least in part due to the material of the contacted surface. However the material of a contacted surface need not be selected to impart such properties if, for example, a contacted surface of the fluid transfer member guide is surrounded by a barrier (e.g., coating or the like) which prevents direct contact with the material of the guide or at least minimizes any adverse effects of any contact, e.g., provides a suitable barrier so that when a fluid transfer member is inserted therethrough to a GC device inlet assembly, material from a contacted surface is not removed.

In certain embodiments, at least the fluid transfer member guide 20 or at least the inner surface 23 of the fluid transfer member guide 20 may include a surface modification such as a surface coating or the like to reduce any adverse effects of any contact (e.g., the contact (e.g., by a fluid transfer member or fluid transfer member support) will not remove material from the fluid transfer member guide, and in cases where operating significantly outside of the design parameters the material that might be removed in such cases is inert). A coating may be selected to be durable and unreactive or non leaching. For example, at least the inner surface 23 of the fluid transfer member guide may be coated with a non-metal coating, e.g., a "low friction" coating such a fluoropolymer coating, e.g., a polytetrafluoroethylene (PTFE) coating such as a Teflon® coating or the like. Other surface coatings may include a silicone coating, parylene coating, titanium nitride (TiN) coating, graphite coating, molybdenum disulfide (MoS2) coating, etc. For example, at least the inner surface 23 of guide 20 may be adapted to have a low coefficient of friction with respect to a contacting surface (e.g., a surface of a fluid transfer member, fluid transfer member support, e.g., a coefficient of friction that may range from about 0.04 to about 0.1, where representative ranges include, but are not limited to: 0.04 to about 0.06; from about 0.06 to about 0.08; from about 0.08 to about 0.1. The coating may be any suitable thickness, where coatings of very thin diameter may be used, e.g., applied by sputtering, electrostatic vapor deposition, chemically reactive or combustion gas phase deposition, liquid phase deposition, or the like. For example, a coating may be as thin as about 100 Å or less, e.g., 50 Å or less, where representative coatings may range from about 20 Å to about 150 Å, from about 150 Å to about 300 Å, e.g., from about 300 Å to about 2000 Å.

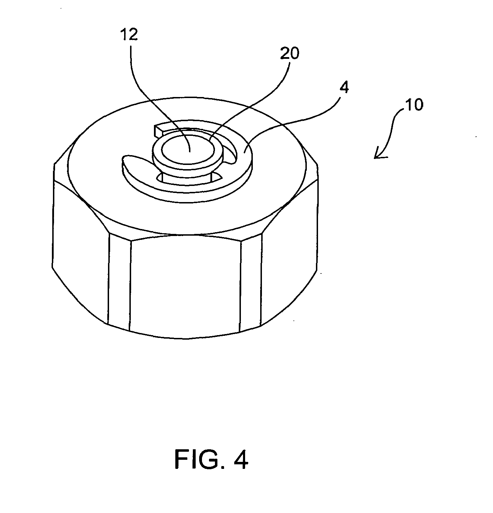

A septum nut retainer assembly may also include a securing member 4 for securing the fluid transfer member guide 20 of the septum retainer 20 in position through opening 12 of nut 1. The securing member 4 may be any suitable shape, e.g., a closed or open ring, herein shown as a c-ring. In certain embodiments, guide 20 includes grooves 22 for contactable with the securing member. Fig. 4 shows septum retainer nut assembly 10 with securing member 4 positioned to secure fluid transfer member guide 20, inserted through opening 12, in opening 12.

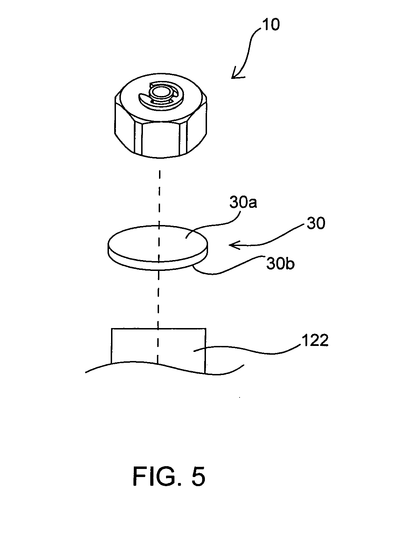

As noted above, the subject septum nut retainers are used with septa. The subject septum nut retainers may be used with any suitable septa, e.g., septa suitable for use with Agilent Technologies GC systems, or other manufacturer's systems, or Agilent technologies licensee's systems. An exemplary septum 30 is shown in Fig. 5 and includes a first or top side 30a for contacting a septum nut retainer assembly and more specifically a surface of a septum retainer of a septum nut retainer assembly and a second or bottom surface 30b for mating with an inlet assembly 122 of a GC device assembly (see Figs. 1A and 1B). The particular septum will depend on a variety of factors such as the particular chromatographic protocol. For example, septa may be rubber, silicone. Teflon lined, etc. Exemplary septa include, but are not limited to, 11mm low bleed septa (e.g., available from Agilent Technologies), 11 mm septa with partial through hole (e.g., available from Agilent Technologies), Merlin Microseal Septa (e.g., available from Agilent Technologies), 11 mm high-temperature silicon septa (e.g., available from Agilent Technologies), as well as septa as described in US Patent No. 6,648,853; the disclosure of which is herein incorporated by reference.

The subject septum retainer nut assemblies may be used with any suitable GC device inlet assembly, e.g., packed column inlets and capillary column inlets. Exemplary types of capillary column inlets include: capillary direct, split/splitless, programmed temperature vaporizing (PTV), and cool on-column direct. For example, a septum nut retainer assembly may be used with a GC device inlet assembly of an Agilent Technologies GC or GC/MS assembly, such as Agilent Technologies part numbers: 6890N GC, 5973 Inert MSD, 5973N GC/MS, 6850 Series II Network GC and 6850 Series Network GC, 3000 Micro GC, 6820 GC, 6890 Micro ECD, etc. Aspects of the subject invention include septum retainer nut assemblies adapted for retrofitting existing GC device inlet systems.

Also provided by the subject invention are fluid transfer member supports for introducing a fluid transfer member into a fluid transfer member guide of a septum nut assembly of a GC device inlet assembly, e.g., a septum nut retainer assembly as described above.

Fig. 6 shows an exemplary fluid transfer member support 50 according to the subject invention and Fig. 7 shows the fluid transfer member support of Fig. 6 having a fluid transfer member 60 therein. The fluid transfer member supports may be used with a sample injection system, e.g., a manual or auto sample injector, as shown in Fig. 8 which shows a partial, exploded view of a sample injection system 70 having a foot 170, plate 171 and a screw 172 for securing the components together and fluid transfer member support 50 associated therewith. Exemplary auto sample injectors with which the subject invention may be adapted for use include Agilent Technologies GC autosamplers, e.g., Agilent Technologies 7683 Automatic Liquid Sampler and the like (e.g., an HP G1916A automatic liquid sampler with an HP G1513A controller to control sample injection), or other manufacturers' GC automatic liquid injection systems. The injectors may be multipiece, e.g., as in the example depicted in Figure 8, or molded entirely into one piece.

The fluid transfer member supports are configured to be operatively connected to a fluid transfer member guide of a septum retainer nut assembly, such that when a fluid transfer member is moved into the GC device inlet assembly via the fluid transfer member support, the fluid transfer member does not contact the fluid transfer member guide in a manner that removes material from the fluid transfer member guide. For example, as described below, the support may be dimensioned and/or shaped and/or otherwise constructed of or include a material (e.g., including a surface modification coating) so that when a fluid transfer member is moved into the GC device inlet assembly via the fluid transfer member support, the fluid transfer member does not contact the fluid transfer member guide in a manner that removes material from the fluid transfer member guide.

Referring to Fig. 6, fluid transfer member support 50 includes an elongate member 55 having first and second ends 53 and 51, respectively, and a passageway 56 therethrough. In use, as shown in Fig. 7, a fluid transfer member, e.g., syringe, enters passageway 56 at second end 51 and exits the passageway at first end 53, at which point the fluid transfer member may then access a septum retainer nut assembly operationally connected to the second end of the support.

Embodiments include a fluid transfer member support connectable to fluid transfer member guide of septum retainer nut assembly of a GC device inlet assembly and in which are adapted so that when a fluid transfer member is inserted through the support to a septum retainer nut assembly and to a GC device inlet assembly, the fluid transfer member does not contact the fluid transfer member guide in a manner that removes material from the fluid transfer member guide. Accordingly, aspects include fluid transfer member supports that are dimensioned to provide such features.

Elongate member 55 may have any suitable dimensions, which dimensions may be dictated at least in part by the dimensions of a fluid transfer member with which it is designed to be used, the dimensions of a septum retainer nut assembly with which it is designed to be used, etc. For example, in certain embodiments, elongate member 55 may have a length at least as great or greater than the length of a fluid transfer member with which it is designed to be used, where in certain embodiments the elongate member 55 may have a length at least about 1% greater or more than the length of a fluid transfer member with which it is designed to be used, e.g., 5% greater or more. For example, in certain embodiments, elongate member 55 may have a length at least about 0.4 cm, e.g., at least about 1.0 cm, e.g., at least about 2.5 cm, or more.. For example, elongate member 55 may have a length that ranges from about 0.4 cm to about 2.5cm when designed to be used with a fluid transfer member having a length that ranges from about 2 cm to about 10 cm.

Passageway 56 is configured to accommodate a fluid transfer member therethrough, e.g., without physical contact of the fluid transfer member with the walls of the passageway in certain embodiments and/or adapted to reduce any adverse effects of any contact (e.g., removal of material from inner surface of the passageway, etc.) For example, the inner diameter of a passageway 56 may be at least about 0.2 mm, e.g., at least about 0.5 mm, e.g., at least about 1.0 mm, e.g., at least about 0.2 mm to about 1.0 mm, For example, the inner diameter of a passageway may have a range from about 0.55 mm to about 0.60 mm when designed to be used with a 26 gauge fluid transfer member.

As described above, support 50 is configured to connect to a fluid transfer member guide of a septum retainer nut assembly. Typically, first end 53 is configured to mate with a fluid transfer member guide and as such is sized and shaped to fit with a fluid transfer member guide so that communication for passage of a fluid transfer member from the support to the guide is established. Accordingly, first end 56 may be any suitable shape, where the shape may be dependant upon the configuration of a septum retainer nut assembly and particularly a guide of a septum retainer nut assembly with which the first end of the support is to be mated.

Fig. 9shows an exploded view of first end 53 which includes a conical member 153, in this embodiment in the shape of a frustum, having a base or first end 157 and tip or second end 158, which second end may be referred to as a fluid transfer member guide contacting end. In certain embodiments, conical member 153 may have a length at least about 2mm, e.g., at least about 4mm, e.g., at least about 8mm, e.g., in certain embodiments conical member 153 may have a length that ranges from about 2.0 mm to about 8.0 mm. The width (outer diameter) of base 157 may be at least about 2mm, e.g., at least about 4mm, e.g., at least about 8mm, e.g., in certain embodiments base 157 may have a width that ranges from about 2.0 mm to about 8.0 mm. The width (outer diameter) of tip 158 may be at least about 0.5 mm, e.g., at least about 0.8 mm, e.g., at least about 1.0 mm, e.g., in certain embodiments tip 158 may have a width that ranges from about 0.50 mm to about 1.0 mm.

The material of support 50 may be selected to be compatible with any chemicals, conditions or physical contact with which the support may be exposed in the intended use, e.g., material may be selected so that when a fluid transfer member is inserted therethrough to a GC device inlet assembly, material from the support, e.g., from the inner surface of passageway 56, is not removed. Material may also be selected so that when first end is connected to a fluid transfer member guide of a septum retainer nut assembly, material of the first end of the support is not removed due to the contacting surfaces of the guide and the first end of the support.

Exemplary materials that may be used to fabricate a fluid transfer member support 50, include metals, plastics, etc. In certain embodiments, the support or at least elongate member 55 is made of a non-metallic material, e.g., a plastic, ceramic, etc. In this manner, if, e.g., the inner surface of passageway 56 is contacted with a surface of another component (e.g., a fluid transfer member, etc.,) the contact will not remove material from the inner surface. However this need not be case if, for example, the surface of the passageway is surrounded by a barrier (e.g., coating or the like) which prevents direct contact with the material of the inner surface of the passageway or at least minimizes any adverse effects of any contact, e.g., provides a suitable barrier so that when a fluid transfer member is inserted therethrough to a GC device inlet assembly, material from the passageway is not removed.

In certain embodiments, support 50, e.g., the inner surface of passageway 56 and/or the outer surface of support such as at least a fluid transfer member guide-contacting surface of the support, may include a surface modification such as a surface coating or the like to reduce any adverse effects of any contact (e.g., so that any contact (e.g., by a fluid transfer member and/or fluid transfer member guide) will not remove material from any contacted component). A coating may be selected to be durable and unreactive or non leaching. For example, a surface of the support may be coated with a non-metal coating, e.g., a substantially frictionless coating such a fluoropolymer coating, e.g., a polytetrafluoroethylene (PTFE) coating such as a Teflon® coating or the like. Other surface coatings may include a silicone coating, parylene coating, titanium nitride (TiN) coating, graphite coating, molybdenum disulfide (MoS₂) coating, etc. For example, a support surface may be adapted to have a low coefficient of friction with respect to a contacting surface (e.g., a surface of a fluid transfer member, fluid transfer member guide, e.g., a coefficient of friction that may range from about 0.04 to about 0.1, where representative ranges include, but are not limited to: 0.04 to about 0.06, e.g., from about 0.06 to about 0.08, e.g., from about 0.08 to about 0.1. The coating may be any suitable thickness, where coatings of very thin diameter may be used, e.g., applied by sputtering or the like. For example, a coating may have a diameter as thin as about 100 Å or less, e.g., 50 Å or less, where coatings may range from about 10 to about 2000 Å, where representative ranges include, but are not limited to: 20 Å to about 150 Å, e.g., from about 150 Å to about 300 Å, e.g., from about 300 Å to about 2000 Å.

The subject invention also includes a GC device sample introduction system (see for example Figs 1A and 1B). Embodiments of the subject GC device sample introduction systems include a GC device inlet assembly having a septum retainer nut assembly with a fluid transfer member guide and a fluid transfer member support for introducing a fluid transfer member into the fluid transfer member guide of the septum retainer nut assembly wherein the fluid transfer member support is operatively connected to the fluid transfer member guide such that when a fluid transfer member is moved into the GC device inlet assembly via the support, the fluid transfer member does not contact the fluid transfer member guide in a manner that removed material from the fluid transfer member guide.

The subject invention may be adapted for use with any type of GC device inlet assembly, where various examples of types of GC device inlet assemblies are described herein and elsewhere. For example, embodiments may include GC device inlet assemblies having a septum retainer nut assembly, where the GC device inlet assembly may be a packed column inlet assembly, capillary column inlet assembly, and the like. Exemplary types of capillary column inlet assemblies which may be used with the subject invention include, but are not limited to: capillary direct, split/splitless, programmed temperature vaporizing (PTV), and cool on-column direct. For example, GC device inlet assemblies of an Agilent Technologies GC or GC/MS system, such as Agilent Technologies part numbers: 6890N GC, 5973 Inert MSD, 5973N GC/MS, 6850 Series II Network GC and 6850 Series Network GC, 3000 Micro GC, 6820 GC, 6890 Micro ECD.

Aspects include a GC device sample introduction system that includes a GC device inlet assembly having a subject septum retainer nut assembly 10 with a fluid transfer member guide 20 and/or which include a subject fluid transfer member support 50.

The GC sample introduction system may be adapted for use with any suitable GC device, including, but not limited to, Agilent Technologies GC and GC/MS devices, such as, e.g., Agilent Technologies part numbers: 6890N GC, 5973 Inert MSD, 5973N GC/MS, 6850 Series II Network GC and 6850 Series Network GC, 3000 Micro GC, 6820 GC, and 6890 Micro ECD.

### METHODS

Also provided are methods of introducing a sample into a GC device. In general, embodiments include positioning a fluid transfer member in a GC device sample introduction system and introducing sample to the GC device via the positioned fluid transfer member.

Any suitable fluid transfer member may be used and may vary depending on the particular GC protocol being performed. A variety of fluid transfer members may be employed including tapered and blunt tipped fluid transfer members. For example, sharp or blunt tipped needles (e.g., stainless steel needles) may be used, tubing such as rubber tubing may be used, etc. The size of the fluid transfer needle may vary, where in certain embodiments the size of a fluid transfer member may range from, from about 32 gauge to about 16 gauge. The length of a fluid transfer member may vary, where in certain embodiments the length of a fluid transfer member may range from 2 cm to about 15 cm, and have a volume ranging from about 1 µl to about 5000 µl. For example, a fluid transfer member may be about a 23 gauge needle having a volume that may range from about 5 µl to about 10 µl and a length that ranges from about 5 cm to about 25 cm.

Aspects include positioning a fluid transfer member in a GC device sample introduction system that includes a GC device inlet assembly having a septum retainer nut assembly with a fluid transfer member guide, e.g., as described above, and a fluid transfer member support for introducing a fluid transfer member into the fluid transfer member guide of the septum retainer nut assembly wherein the fluid transfer member support is operatively connected to the fluid transfer member guide such that when a fluid transfer member is moved into the GC device inlet assembly via the support, the fluid transfer member does not contact the fluid transfer member guide in a manner that removed material from the fluid transfer member guide, e.g., as described above.

Accordingly, aspects include supporting a fluid transfer member in a fluid transfer member support (which may be connected to a manual or auto sampler device) and specifically through the passageway of the support, and introducing the supported fluid transfer member to a fluid transfer member guide of a septum retainer nut assembly operatively connected to the support (e.g., connected to a guide-contacting end of the elongate member of the support). A fluid transfer member (e.g., of a fluid transfer member support) may be aligned perpendicular to the septum retainer nut assembly so that a longitudinal motion of the fluid transfer member towards the septum retainer nut assembly allows the fluid transfer member to enter the fluid transfer member guide of the septum retainer nut assembly and penetrate the septum retained by the septum retainer nut assembly a sufficient distance to allow sample to be introduced to the inlet assembly via the supported fluid transfer member.

In certain embodiments a fluid transfer member may be inserted into a fluid transfer member support prior to operatively connecting the support to the fluid transfer member guide of the septum retainer nut assembly or a connection between the support and the fluid transfer guide may first be made and then the fluid transfer member may be inserted into the support. In certain embodiments, the fluid transfer member may be maintained within the support so that no portion of the fluid transfer member extends from the guide-contacting end of the support until a suitable connection between the support and the fluid transfer member guide is provided, at which time the supported fluid transfer member may be caused to extend from the guide-contacting end of the support a suitable distance.

Accordingly, aspects include, prior to connecting the fluid transfer member support with the fluid transfer member guide of the septum retainer nut assembly, first positioning the fluid transfer member within a fluid transfer member support and maintaining it therein in a manner so that the fluid transfer member does not protrude from the end of the support that is contacted with the fluid transfer member guide, and then connecting the support to the fluid transfer member guide of the septum retainer nut assembly so that the fluid transfer member is maintained wholly within the support until the support is operatively connected to the guide. Once a connection between the support and the guide is made, the fluid transfer member may be extended a suitable distance from within the support, thereby protecting the fluid transfer member and the fluid transfer member guide.

Aspects may also include first operatively connecting the support to the guide prior to introducing the fluid transfer member into the support and then inserting the fluid transfer member into the support subsequent to providing a connection between the support and the guide, thereby protecting the fluid transfer member and the fluid transfer member guide. In such embodiments, the fluid transfer member does not extend from the guide-contacting end of the support (for example first end 53 of support 50) until the support is connected to the guide.

In either case, the fluid transfer member is protected from unintentional physical contact with the septum retainer nut assembly and particularly the guide of the assembly, when the fluid transfer member is moved into the GC device inlet assembly, thereby providing a method of moving the fluid transfer member into the GC device inlet assembly in a manner that does not remove material from a component of the system, e.g., from the guide. Once a suitable connection between the support and the guide is made and the fluid transfer member is introduced into the guide, the fluid contacting member may then be caused to penetrate the septum of the septum retainer nut assembly and, after sufficient penetration of the septum by the fluid transfer member, sample may be expelled from the fluid transfer member and injected into the inlet assembly. Once sample introduction is complete, the fluid transfer member may be withdrawn from the GC device. Withdrawal of the fluid transfer member may be accomplished in any suitable manner. In certain embodiments, prior to removing the fluid transfer member from the GC device, the fluid transfer member is withdrawn to a position such that it is wholly within the support such that it does not extend from the guide- contacting end of the support. Once positioned wholly in the support, the support may then be removed from the fluid transfer member guide, thereby protecting the fluid transfer member and the fluid transfer member guide during withdrawal of the fluid transfer member from the device.

As described above, the inlet is supplied with a carrier gas stream and the carrier gas/sample combination is then passed through the column so that the sample may be separated into its components. As the carrier gas (containing the sample) exits the column 118, a detector as may then detect the presence of one or more sample constituent components described above. The detector output signal may be received by a computing means and optionally stored in the storage means. The detector output signal may be provided in the form of data representative of a series of sample peaks in at least one sample peak series. The sample peaks may be identified and presented in one or more sample peak series. Each sample peak series may be analyzed with aid of a peak identification method based on data representative of one or more selected standard peak groups. Data representative of the standard peak group(s) may be predetermined or inputted at an input/output means and stored in a storage means.

### KITS

Finally, kits are also provided. The subject kits may include a septum retainer nut assembly as described above. A septum may also be provided for use with the septum retainer nut assembly, where in certain embodiments a plurality of septa may be provided. In embodiments in which a plurality of septa are provided, each may be the same or some may be different, e.g., different sizes, materials, etc. Kits may also include a fluid transfer member support as described above, for use with a septum retainer nut assembly provided in the kit. Kits may also include a fluid transfer member, e.g., a syringe or the like, where in certain embodiments a plurality of fluid transfer members may be provided. In embodiments in which a plurality of fluid transfer members are provided, each may be the same or some may be different, e.g., different sizes, etc.

The subject kits may also include written instructions for using the components of a kit, e.g., for using a septum nut retainer assembly and/or fluid transfer member support with a GC sample introduction system. Instructions of a kit may be printed on a substrate, such as paper or plastic, etc. As such, the instructions may be present in the kits as a package insert, in the labeling of the container of the kit or components thereof (i.e., associated with the packaging or sub-packaging) etc. In other embodiments, the instructions are present as an electronic storage data file present on a suitable computer readable storage medium, e.g., CD-ROM, diskette, etc. In yet other embodiments, the actual instructiqns are not present in the kit, but means for obtaining the instructions from a remote source, e.g. via the Internet, are provided. An example of this embodiment is a kit that includes a web address where the instructions can be viewed and/or from which the instructions can be downloaded. As with the instructions, this means for obtaining the instructions is recorded on a suitable substrate.

In certain embodiments of the subject kits, the components of the kit are packaged in a kit containment element to make a single, easily handled unit, where the kit containment element, e.g., box or analogous structure, may or may not be an airtight container.

While the present invention has been described with reference to the specific embodiments thereof, it should be understood by those skilled in the art that various changes may be made and equivalents may be substituted without departing from the true scope of the invention. In addition, many modifications may be made to adapt a particular situation, material, composition of matter, process, process step or steps, to the objective, scope of the present invention. All such modifications are intended to be within the scope of the claims appended hereto.

## Claims

1. A septum retainer nut assembly (10) for use in a Gas Chromatography (GC) device inlet assembly, said retainer assembly comprising:
(a) a nut (1) having a top surface with an opening (12) therethrough; and
(b) a septum retainer (2) having a fluid transfer member guide (20) passing through said opening.

2. The septum retainer nut assembly of Claim 1, wherein said fluid transfer member guide has a tubular structure.

3. The septum retainer nut assembly of Claims 1 or 2, wherein said fluid transfer member guide has an inner surface (23) coated with a non-metal material.

4. The septum retainer nut assembly of Claim 3, wherein said non-metal material is a substantially frictionless material.

5. The septum retainer nut assembly of any of Claims 1 to 4, wherein said assembly further comprises a septum (30).

6. The septum retainer nut assembly of any of Claims 1 to 5, wherein said assembly further comprises a securing member (4) for securing said fluid transfer member guide in position through said opening.

7. A fluid transfer member support (50) for introducing a fluid transfer member into a fluid transfer member guide of a septum retainer nut assembly according to Claims 1 to 6, said fluid transfer member support comprising:
an elongated member (55) having first (53) and second (51) ends and a passageway (56) therethrough dimensioned to accommodate a fluid transfer member,
wherein said fluid transfer member support is configured to be operatively connected to a fluid transfer member guide of a septum retainer nut assembly of a GC device inlet assembly such that when a fluid transfer member is moved into said GC device inlet assembly via said support, said fluid transfer member does not contact said fluid transfer member guide in a manner that removes material from said fluid transfer member guide.

8. A GC device sample introduction system comprising:
(a) a GC device inlet assembly having a septum retainer nut assembly (10) according to any of Claims 1 to 6; and
(b) a fluid transfer member support (50) for introducing a fluid transfer member into said fluid transfer member guide of said septum retainer nut assembly, wherein said fluid transfer member support is operatively connected to said fluid transfer member guide such that when a fluid transfer member is moved into said GC device inlet assembly via said support, said fluid transfer member does not contact said fluid transfer member guide in a manner that removes material from said fluid transfer member guide.

9. A method of introducing sample into a GC device, said method comprising:
(a) positioning a fluid transfer member into a GC device sample introduction system comprising:
(i) a GC device inlet assembly having a septum retainer nut assembly with a fluid transfer member guide; and
(ii) a fluid transfer member support for introducing a fluid transfer member into said fluid transfer member guide of said septum retainer nut assembly,
wherein said fluid transfer member support is operatively connected to said fluid transfer member guide such that when said fluid transfer member is positioned into said GC device inlet assembly via said support, said fluid transfer member does not contact said fluid transfer member guide in a manner that removes material from said fluid transfer member guide; and
(b) introducing sample into said GC device via said positioned fluid transfer member.

10. A kit comprising:
a septum retainer nut assembly (10) as claimed in any of claims 1 to 6 and a support (50) as claimed in claim 7.
